Europäisches Patentamt

European Patent Office

Office européen des brevets

(11) Veröffentlichungsnummer: **0 322 573**
**A1**

## EUROPÄISCHE PATENTANMELDUNG

(21) Anmeldenummer: 88119833.7

(22) Anmeldetag: 28.11.88

(51) Int. Cl.⁴: **G08G 1/09**

(30) Priorität: 01.12.87 DE 3740736

(43) Veröffentlichungstag der Anmeldung:
05.07.89 Patentblatt 89/27

(84) Benannte Vertragsstaaten:
**AT BE CH DE ES FR GB IT LI NL SE**

(71) Anmelder: **Siemens Aktiengesellschaft Berlin und München**
**Wittelsbacherplatz 2**
**D-8000 München 2(DE)**

(72) Erfinder: **von Tomkewitsch, Romuald,**
**Dipl.-Ing.**
**Winklweg 8**
**D-8026 Ebenhausen(DE)**

(54) **Fahrzeugterminal.**

(57) Ein Fahrzeugterminal für ein Verkehrsleitsystem zur Anordnung auf dem Armaturenbrett eines Fahrzeugs ist als ein Kompaktgerät (1) ausgebildet, mit einem flachen Gehäuse, mit einem Anzeigefeld (5) an der Vorderseite, mit einer IR-Sende- und Empfangseinheit, deren Sende- und Empfangsdioden zur lichtdurchlässigen Rückseite gerichtet sind, und mit einer an der Oberseite des Kompaktgerätes (1) aufklappbaren und in einer Schrägstellung arretierbaren Tastatur (17).

**FIG 1**

EP 0 322 573 A1

## Fahrzeugterminal für ein Verkehrsleitsystem.

Die Erfindung bezieht sich auf ein Fahrzeugterminal für ein Verkehrsleitsystem zur Anordnung auf dem Armaturenbrett eines Kraftfahrzeuges.

Für die individuelle Zielführung von Kraftfahrzeugen werden Leitsysteme verwendet. Ein derartiges Leitsystem ist beispielsweise in der DE-PS 29 23 634 beschrieben. Dazu sind im Fahrzeug eine Reihe von Einrichtungen erforderlich, die aus unterschiedlichen verschiedenen Komponenten bestehen. Neben verschiedenen Sensoren ist ein Rechner zur Verarbeitung der verschiedenen Daten, evtl. ein besonderer Navigationsrechner, eine Anzeigeeinrichtung, eine Bedieneinheit und eine InfrarotSende- und Empfangseinrichtung erforderlich. Der Bordrechner kann irgendwo im Fahrzeug untergebracht sein. Die Anzeigeeinrichtung und die Bedieneinheit ist zweckmäßigerweise im oder am Armaturenbrett untergebracht. Die Infrarot-Sende- und Empfangseinrichtung ist beispielsweise zwischen der Windschutzscheibe und dem Innenrückspiegel angebracht (DE-OS 36 05 681; Patentanmeldungen VPA 87 G 1774, VPA 87 G 1775). Jedes dieser Geräte braucht ein eigenes Gehäuse, zum Teil eine eigene Stromversorgung und muß getrennt installiert werden. Die Geräte müssen montiert und über Kabel miteinander verbunden werden. Dies ist insbesondere dann sehr aufwendig, wenn die Geräte nachträglich im Fahrzeug einzubauen sind.

Aufgabe der Erfindung ist es daher, die obengenannten Nachteile zu vermeiden und ein Fahrzeugterminal für ein obengenanntes Verkehrsleitsystem zu schaffen, welches kostengünstig gefertigt und mit geringem Aufwand im Kraftfahrzeug installiert werden kann. Insbesondere für die Akzeptanz eines solchen Verkehrs leit- und Informationssystems ist es erforderlich, daß das Fahrzeugterminal für den Fahrzeughalter preiswert ist.

Diese Aufgabe wird erfindungsgemäß dadurch gelöst, daß das Fahrzeugterminal als ein Kompaktgerät ausgebildet ist, mit einem flachen Gehäuse, mit einem Anzeigefeld an der Vorderseite, mit einer IR-Sende- und Empfangseinheit, deren Sendeund Empfangsdioden zur lichtdurchlässigen Rückseite gerichtet sind, und mit einer an der Oberseite des Kompaktgeräts aufklappbaren und in einer Schrägstellung arretierbaren Tastatur.

Das erfindungsgemäße Kompaktgerät kann preiswert als eine einzige konstruktive Einheit aufgebaut werden. Das flache Gerät kann auf dem Armaturenbrett angeordnet werden, ohne daß es dabei das Sichtfeld des Fahrers einengt. Dabei ist kein umständlicher Installationsaufwand erforderlich, das Fahrzeugterminal ist lediglich mit den erforderlichen Sensoren und einer Spannungsquelle zu verbinden. Die einzelnen Komponenten sind inklusive des Kommunikationsteils äußerst zweckmäßig in dem Kompaktgerät vereint.

Um den Fahrer gut zu informieren, ohne ihn allzu sehr von dem Verkehrsgeschehen abzulenken, ist in vorteilhafter Weise das Anzeigefeld großformatig ausgeführt. Dazu erstreckt sich bei den verhältnismäßig kleinen und flachen Fahrzeugterminal das Anzeigefeld über die gesamte Vorderseite des Gerätes, die dem Fahrer zugewandt ist. In vorteilhafter Weise ist das Anzeigefeld durch eine Schute nach oben und zu den Seiten hin abgedeckt, damit die Anzeige durch Ober- bzw. Seitenlicht nicht überstrahlt wird. Zweckmäßigerweise kann die Schute am Gehäuse mit angeformt sein.

In einer besonderen und vorteilhaften Ausgestaltung der Erfindung ist das Anzeigefeld von einer transmissiven Flüssigkristallanzeige (LCD) gebildet und mit einem mittig im Kompaktgerät angeordneten Leuchtschacht mit einer Lichtquelle verbunden. So wird in vorteilhafter Weise von der Rückseite her das Anzeigefeld gleichmäßig ausgeleuchtet und kann mit einer vorgesehenen Lichtstärkenregelung den Sichtverhältnissen angepaßt werden.

Besonders vorteilhaft ist es, daß die Sende- und Empfangseinheit, die neben dem Infrarotsender und -empfänger mit den entsprechenden Dioden eine integrierte Sende- und Empfangslinseneinheit aufweist, die fest miteinander verbunden ist, im Gehäuse des Kompaktgeräts um zwei Achsen schwenk- und arretierbar gelagert ist. Auf diese Weise läßt sich - unabhängig von der Ausrichtung des Kompaktgerätes - die Sende- und Empfangseinheit für die Datenübertragung zur Sende- und Empfangseinrichtung der Baken ausrichten. Dabei kann der Infrarotempfänger zweckmäßigerweise von zwei räumlich voneinander getrennten Empfängern gebildet sein. Innerhalb der Sende- und Empfangseinheit ist der Infrarotsender im mittleren Teil angeordnet. Die mit mehreren Empfangsdioden ausgestatteten Empfänger sind zu beiden Seiten des Senders angeordnet. Dies hat den Vorteil, daß sich der Grad einer möglichen Abdeckung der Empfangsoptik durch einen sich vor der Windschutzscheibe bewegenden Scheibenwischer verkleinert.

In einer vorteilhaften Ausgestaltung ist die großflächige Tastatur unterhalb eines aufklappbaren Gehäusedeckels angeordnet, so daß sie nur für den Zweck des Ein- bzw. Umspeicherns neuer Fahrziele und zum Aufrufen besonderer Bedienprogramme herausgeklappt werden muß. Während der Fahrt ist die alphanumerische Tastatur im Gerätedeckel versenkt, sie kann jedoch mit einem Fingerdruck leicht herausgeklappt werden und ist in der Schrägstellung gut sichtbar und leicht zugänglich angeordnet. Ein weiterer Vorteil ist noch dadurch gegeben, daß die versenkbare Tastatur das Sichtfeld des Fahrers nicht einengt.

Auf der Oberseite des Fahrzeugterminals im vorderen Bereich sind einige wenige Bedienelemente angeordnet, die von dem Gehäusedeckel nicht verdeckt sind. Diese Bedienelemente können beispielsweise ein Ein-/Ausschalter, ein Schalter zur Abschaltung einer Sprachausgabe, zwei Tasten zum Durchrollen eingespeicherter Zieladressen und eine Starttaste sein. Diese wenigen Tasten reichen für den Normalfall, um abgespeicherte Ziele vorzugeben, aus. Sie können auch während der Fahrt vom Fahrer bedient werden, ohne daß eine nennenswerte Ablenkung vom Fahrgeschehen erfolgen muß.

Zweckmäßigerweise ist das Fahrzeugterminal, zumindest aber der Gerätedeckel, matt schwarz, so daß keine störenden Spiegelungen in der Windschutzscheibe hervorgerufen werden können.

Zur Befestigung des erfindungsgemäßen Fahrzeugterminals auf dem Armaturenbrett des Kraftfahrzeugs ist mindestens ein Montagefuß vorgesehen. Dabei ist es zweckmäßig, Montagefüße vorzusehen, die speziell für die verschiedenen Kraftfahrzeugtypen angepaßt sind. Das hat den Vorteil, daß für alle Fahrzeugtypen ein einziges Fahrzeugterminal erforderlich ist, lediglich für die Montage auf dem Armaturenbrett des Fahrzeugs werden besondere Adapterfüße benötigt. Diese Montagefüße können in einer zweckmäßigen Weiterbildung der Erfindung eine Kabeldurchführung für das erforderliche Anschlußkabel aufweisen. Sie können aber darüber hinaus Kühlkörper aufweisen, die an die Luftaustrittsöffnungen im Fahrzeug zur Belüftung der Windschutzscheibe heranreichen. Der am Boden des Kompaktgerätes befestigte Montagefuß ist dabei thermisch gut leitend ausgebildet und steht mit den Bauelementen und der Leiterplatte im thermischen Kontakt. Auf diese Weise wird die Erwärmung kritischer Teile des Fahrzeugterminals infolge von Sonneneinstrahlung durch die Belüftung der Windschutzscheibe durch das Kraftfahrzeug in Grenzen gehalten. Der Kühlkörper kann aber auch am Gehäuseboden des Kompaktgerätes angeordnet sein.

Das erfindungsgemäße Fahrzeugterminal ist ohne großen Aufwand auf dem Armaturenbrett der verschiedenstens Fahrzeugtypen zu montieren und kann optimal zum Fahrer hin ausgerichtet und arretiert werden. Dann kann unter Beibehaltung dieser optimalen Zuordnung zum Fahrer hin die Sende- und Empfangseinheit optimal auf die Sender und Empfänger der Leitbake, die beispielsweise am Signalmast eines Signalgebers der Straßenverkehrssignalanlage angeordnet sind, ausgerichtet und arretiert werden.

An einem Ausführungsbeispiel wird die Erfindung anhand der Zeichnung erläutert. Dabei zeigen

Fig. 1 das erfindungsgemäße Kompaktgerät,

Fig. 2 eine schematische Darstellung des Fahrzeugterminals auf dem Armaturenbrett in Seitenansicht und

Fig. 3 schematisch in Draufsicht und Seitenansicht die Anordnung von Anzeigefeld und Sende- und Empfangseinheit.

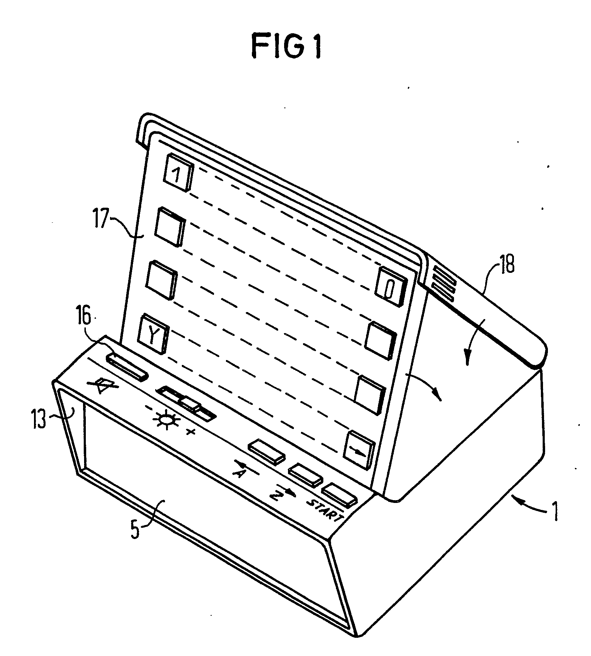

In Fig. 1 ist perspektivisch das Fahrzeugterminal mit aufgeklappter Tastatur gezeigt. Das Kompaktgerät 1 weist an der Vorderseite das Anzeigefeld 5 auf, welches von der Schute 13 seitlich und oben umgeben ist. Oberhalb der Schute 13 sind die wenigen, immer zugänglichen Bedienelemente 16 angeordnet. Der hochgeklappte Gerätedeckel 18 schützt normalerweise die eingeklappte, großflächige Tastatur 17, die in der Schrägstellung gut lesbar bedient werden kann. Im Normalfall ist die Tastatur vom Gerätedeckel geschützt abgedeckt.

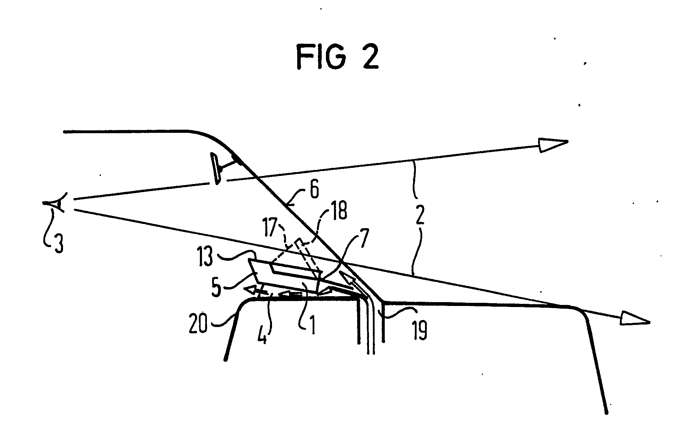

In Fig. 2 ist schematisch das Kompaktgerät 1 mit seinem Montagefuß 4 auf dem Armaturenbrett 20 des Kraftfahrzeugs befestigt. Da erfindungsgemäß der Montagefuß 4 so ausgebildet ist, daß er mit seinem Kühlkörper an die Luftaustrittsöffnungen 19 des Kraftfahrzeugs heranreicht, wird die ausströmende Luft auch zum Kompaktgerät 1 geleitet. Das unter der Windschutzscheibe 6 befindliche Fahrzeugterminal 1 beengt bei eingeklappter Tastatur 17 das Sichtfeld 2 des Fahrers 3 nicht. Dennoch kann das Anzeigefeld 5, welches gegen Fremdlichteinfall mit der Schute 13 geschützt ist, vom Fahrer 3 gut eingesehen werden.

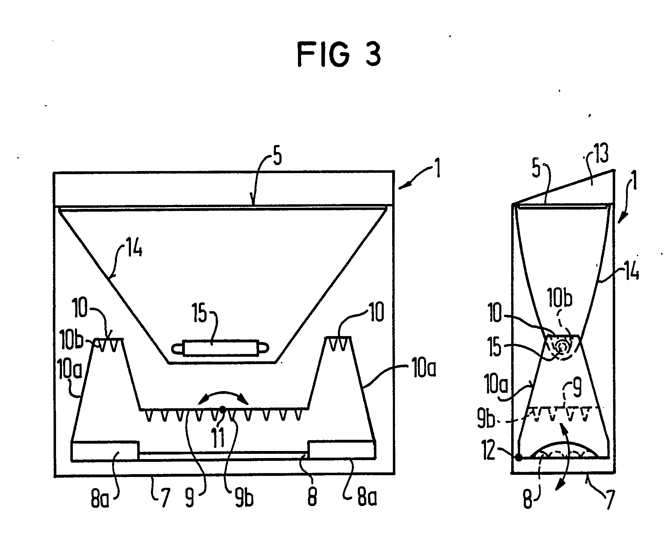

Zur optimalen Ausrichtung der Sende- und Empfangseinheit 8,9,10 ist diese als konstruktive Einheit sowohl um die Achse 11 als auch um die Achse 12, wie dies in der Fig. 3 schematisch dargestellt ist, verschwenk- und arretierbar. Dies hat den Vorteil, daß die Sende- und Empfangseinheit bei vorgegebener Position des Fahrzeugterminals 1 noch optimal ausgerichtet werden kann. Das Anzeigefeld 5 wird mit der Lichtquelle 15 und dem an dem Anzeigefeld 5 angeordneten Leuchtschacht 14 von der Rückseite her erleuchtet. Dabei ist der Leuchtschacht 14 zweckmäßigerweise wie in der dargestellten Form ausgebildet, so daß er sich zwischen den beiden Lichteintrittsschächten 10a der Infrarotempfänger 10 mit den Empfangsdioden 10b befindet. Die integrierte Linse 8 ist fest mit ihrer Sende- und Empfangsoptik 8,8a dem Sender 9 und dem Empfänger 10 zugeordnet. Diese Anordnung ergibt innerhalb des Gerätes eine äußerst günstige Raumausnutzung.

**Ansprüche**

1. Fahrzeugterminal für ein Verkehrsleitsystem zur Anordnung auf dem Armaturenbrett eines Kraftfahrzeuges,
**dadurch gekennzeichnet,** daß das Terminal als ein Kompaktgerät (1) ausgebildet ist, mit einem flachen Gehäuse, einem Anzeigefeld (5) an der Vorderseite, einer IR-Sende- und Empfangseinheit (8,9,10), deren Sende- und Empfangsdioden (9b,10b) zur lichtdurchlässigen Rückseite (7) gerichtet sind, und mit einer an der Oberseite des Kompaktgerätes (1) aufklappbaren und in einer Schrägstellung arretierbaren Tastatur (17).

2. Fahrzeugterminal nach Anspruch 1,
**dadurch gekennzeichnet,** daß das Anzeigefeld (5) sich annähernd über die gesamte Vorderseite des Kompaktgerätes (1) erstreckt.

3. Fahrzeugterminal nach Anspruch 1 oder 2,
**dadurch gekennzeichnet,** daß für das Anzeigefeld (5) eine Schute (13) vorgesehen ist.

4. Fahrzeugterminal nach Anspruch 3,
**dadurch gekennzeichnet,** daß die Schute (13) an das Gehäuse mit angeformt ist.

5. Fahrzeugterminal nach einem der Ansprüche 1 bis 4,
**dadurch gekennzeichnet,** daß das Anzeigefeld (5) von einer transmissiven LCD gebildet ist und einen mittig im Kompaktgerät (1) angeordneten Leuchtschacht (14) mit einer Lichtquelle (15) aufweist.

6. Fahrzeugterminal nach Anspruch 1,
**dadurch gekennzeichnet,** daß die Sende- und Empfangseinheit, deren IR-Sender und -Empfänger (9,10) mit einer integrierten Sende- und Empfangslinseneinheit (8) fest verbunden sind, im Gehäsue des Kompaktgerätes (1) um zwei Achsen (11,12) schwenk- und arretierbar gelagert ist.

7. Fahrzeugterminal nach Anspruch 1 oder 6,
**dadurch gekennzeichnet,** daß die IR-Sende- und Empfangseinheit (8,9,10) zwei IR-Empfänger (10,10b) mit entsprechend ausgebildeten Lichteintrittsschächten (10a) und zugeordneten Empfangslinsen (8a) aufweist, wobei die IR-Empfänger symmetrisch zu beiden Seiten des mittig angebrachten IR-Senders (9,9b) angeordnet sind.

8. Fahrzeugterminal nach Anspruch 1,
**dadurch gekennzeichnet,** daß die Tastatur (17) unterhalb eines aufklappbaren Gehäusedeckels (18) des Kompaktgerätes 1 angeordnet ist.

9. Fahrzeugterminal nach Anspruch 8,
**dadurch gekennzeichnet,** daß die Tastatur (17) sich annähernd über die gesamte Deckelfläche erstreckt.

10. Fahrzeugterminal nach Anspruch 8,
**dadurch gekennzeichnet,** daß zumindest der Gehäusedeckel (18) mattschwarz ist.

11. Fahrzeugterminal nach einem der vorhergehenden Ansprüche, **dadurch gekennzeichnet,** daß auf der Oberseite des Kompaktgerätes (1) im vorderen Bereich einige wenige Bedienelemente (16) angeordnet sind, die nicht vom Gehäusedeckel (18) verdeckt sind.

12. Fahrzeugterminal nach einem der vorhergehenden Ansprüche, **dadurch gekennzeichnet,** daß zur Befestigung des Kompaktgerätes (1) auf dem Armaturenbrett (20) mindestens ein Montagefuß (4) vorgesehen ist.

13. Fahrzeugterminal nach einem der vorhergehenden Ansprüche, **dadurch gekennzeichnet,** daß der Montagefuß (4) eine Kabeldurchführung aufweist.

14. Fahrzeugterminal nach Anspruch 12 oder 13,
**dadurch gekennzeichnet,** daß der Montagefuß (4) als speziell für die verschiedenen KFZ-Typen angepaßter Adapterfuß ausgebildet ist.

15. Fahrzeugterminal nach einem der Ansprüche 12 bis 14,
**dadurch gekennzeichnet,** daß der Montagefuß (4) einen Kühlkörper aufweist, der an die Luftaustrittsöffnungen (19) zur Belüftung der Windschutzscheibe (6) des Kraftfahrzeugs heranreicht und über den Gehäuseboden des Kompaktgerätes (1) thermisch gut leitend mit der Leiterplatte und den (HL-) Bauelementen verbunden ist.

16. Fahrzeugterminal nach einem der Ansprüche 1 bis 14,
**dadurch gekennzeichnet,** daß der Gehäuseboden des Kompaktgeräts (1) einen Kühlkörper aufweist, der an die Luftaustrittsöffnung (19) zur Belüftung der Windschutzscheibe (6) heranreicht und thermisch gut leitend mit der Leiterplatte und den (HL-) Bauelementen verbunden ist.

17. Fahrzeugterminal nach einem der vorherigen Ansprüche, **dadurch gekennzeichnet,** daß das auf dem Armaturenbrett (20) montierte Kompaktgerät (1) mit seinem Anzeigefeld (5) dem Fahrer (3) zugewandt und in dieser Position arretiert ist, und daß die verschwenkbare Sende- und Empfangseinheit (8,9,10) zur Windschutzscheibe (6) hin auf Leitbakensender und -empfänger, die neben Signalgebern der Straßenverkehrssignalanlage angeordnet sind, ausgerichtet und befestigt ist.

# FIG 1

# FIG 2

# FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PROCEEDINGS OF CONVERGENCE 80, 30TH ANNUAL CONFERENCE OF THE IEEE VEHICULAR TECHNOLOGY SOCIETY, INTERNATIONAL CONFERENCE ON TRANSPORTATION ELECTRONICS, 15.-17. September 1980, Dearborn, Michigan, Seiten 1-6, Bohn Printing Co., Utica, Michigan, US; S. TOTANI: "Development and current status of CACS (comprehensive automobile traffic control system)" * Abschnitt 3.1 * --- | 1-5 | G 08 G 1/09 |
| A | FUNKSCHAU, Band 58, Nr. 22, Oktober 1986, Seiten 99-102, München, DE; "Elektronische Lotsen" * Insgesamt * --- | 1 | |
| A | FUNKSCHAU, Nr. 4, Februar 1985, Seiten 33-36, München, DE; "Verkehrssteuerung: informieren und leiten" * Insgesamt * --- | 1 | |
| A | EP-A-0 235 678 (SIEMENS) * Zusammenfassung * --- | 1 | RECHERCHIERTE SACHGEBIETE (Int. Cl.4) G 08 G B 60 R |
| A | FUNKSCHAU, Band 51, Nr. 17, August 1979, Seiten 11-12, München, DE; "Computerlotse für Tram und Bus" * Insgesamt * ------ | 1 | |

Der vorliegende Recherchenbericht wurde für alle Patentansprüche erstellt

| Recherchenort | Abschlußdatum der Recherche | Prüfer |
|---|---|---|
| DEN HAAG | 09-03-1989 | SGURA S. |